# EUROPEAN PATENT SPECIFICATION

(11) **EP 0 588 817 B1**
(45) Date of publication and mention of the grant of the patent: **17.01.1996**
(21) Application number: 92910088.1
(22) Date of filing: 07.04.1992
(51) Int. Cl.: G21C 19/07, G21C 19/40

(54) **MAGAZINE FOR SPENT NUCLEAR REACTOR FUEL ASSEMBLIES**
LAGERGESTELL FÜR ABGEBRANNTE KERNREAKTORBRENNELEMENTE
RATELIER DE STOCKAGE D'ASSEMBLAGES DE COMBUSTIBLE EPUISE DE REACTEUR NUCLEAIRE

(30) Priority: 14.06.1991 SE 9101830
(43) Date of publication of application: 30.03.1994
(73) Proprietor: ABB ATOM AB, S-721 83 Västeras (SE)
(72) Inventor: SUVANTO, Antti, S-723 48 Västras (SE)
(74) Representative: Boecker, Joachim, Dr.-Ing.
(86) International application number: SE9200223
(87) International publication number: WO9222910

(56) References cited:
- EP-A- 0 080 894
- EP-A- 0 220 931
- EP-A- 0 385 187
- WO-A-91/17547
- DE-C- 2 835 392
- SE-B- 429 273
- SE-B- 445 501

## Description

The present invention relates to a magazine for storage of spent nuclear fuel in the fuel pool or interim storage of a nuclear power plant pending ultimate disposal by, for example, reprocessing or ultimate waste disposal in bedrock, when the reactivity has dropped to a level which facilitates the management, reprocessing and ultimate waste dispdsal. The packing degree in the magazine, which consists of a tubular casing containing a number of channels, is thereby determined by factors such as the amount of absorption material in the assembly-separating walls of the channels and the necessary play between the channels formed by the walls and a fuel assembly taking into account the deformations of an assembly.

During use in a fuel core, the normally square tubular casing of the fuel assembly is influenced by the neutron irradiation and by the pressure difference between the inside and the outside of the assembly casing. This may result in the walls of the casing being deformed and the casing,being curved in the longitudinal direction. The walls may become bulged outwards, and as a consequence thereof known magazines have been dimensioned in view of the greatest deformation which arise in a minority of assemblies. This means that a small number of greatly deformed fuel assemblies have determined the dimensions of all the channels and hence the size of the magazine.

To avoid having to overdimension the magazine, it has been proposed to provide the walls of the magazine, which are formed by a number of crossed plates, in the corners of the channels with longitudinal slits. This means that the walls of the channels will have a certain resilience, which makes it possible to make the channels with a somewhat smaller width.

To reduce the risk of the occurrence of gaps during deformation of the channel walls in a magazine, which gaps may entail an unacceptable risk of a reactivity increase, the plates in the perpendicular planes crossing each other are provided with slits of different widths. In a first type of plates, the plate may either be unslitted over the greater part of its length, or have slits which have a width smaller than a second type of plates. The second type of plates is provided with slits, the width of which, with the exception of shorter sections at the ends of the slits, may be greater than twice the thickness of the first plate. In the case of an unslitted first plate, the whole of the first plate will then be bent in the wide slit of the second plate when being influenced by a greatly deformed fuel assembly. When using plates with a thickness of 3-4 mm, the slit in the first type of plates may have a width of 0.5 mm and in the second type a width of about 10 mm.

In magazines of the above-mentioned embodiment, the crossed plates have been welded both to each other and to the surrounding casing. For various reasons, this embodiment requires advanced welding fixtures which, in turn, entail high manufacturing costs. The invention relates to a magazine, the crossing plates of which are fixed in relation to each other by means of a system of suitably arranged slits, which means that welding is only required between the casings of the magazine and the short ends of the plates. This entails considerably lower manufacturing costs.

As already described, the magazine comprises a tubular casing including a number of channels which are formed by a first type of elongated plates joined together in a cruciform configuration with a second type of elongated plates, the first and second types of plates being provided with slits. According to the invention, the above-mentioned first plate is made with a continuous first intermediate portion extending across the plate, a first end portion between the first intermediate portion and a first short side of the plate, and a second end portion between the intermediate portion and a second short side of the plate. The first end portion is provided with a number of first slits, and the second end portion is provided with a number of second slits. These first and second slits extend in parallel with the longitudinal direction of the plate from the intermediate portion and up to a short side and have a width which is at least equal to the thickness of the second plate. The second plate is made with a continuous third and fourth end portion, respectively, extending across the plate, as well as a second intermediate portion. In this second intermediate portion a number of third slits are arranged running in parallel with the longitudinal direction of the plate and with a width which is at least equal to the thickness of the first plate. The sum of the length of either a first or a second slit and a third slit shall be at least so great that, with one of the end portions of a second plate inserted down to the bottom of a first or a second slit, the opposite end portion of the second plate may be fitted over the opposite second and first short sides, respectively, of the first plate.

The crossed plates are joined together by arranging the third end portion of the second plate inserted into a first slit belonging to the first plate and the fourth end portion of the second plate into a second slit, being aligned with the first slit and belonging to the same first plate and, further, by welding the short ends of the plates to the casing.

The invention will be most readily understood with reference to the accompanying drawings wherein
Figure 1 is a side view of a magazine
Figure 2 is a top view of the magazine in Figure 1
Figure 3 shows a first type of the crossed plates forming the channels in the magazine according to Figures 1 and 2
Figure 4 shows a second type of the crossed plates forming the channels
Figure 5 is a section of two crossing plates 8, 9
Figure 6 shows an alternative embodiment of the first type of plates according to Figure 3
Figures 7-10 show in different phases how two plates of the first and second types, crossing each other, are joined together
Figure 11 is a perspective view of the top-portion of the magazine in section XI-XI in Figure 1, and
Figure 12 is a perspective view of the bottom portion of the magazine seen in section XII-XII.

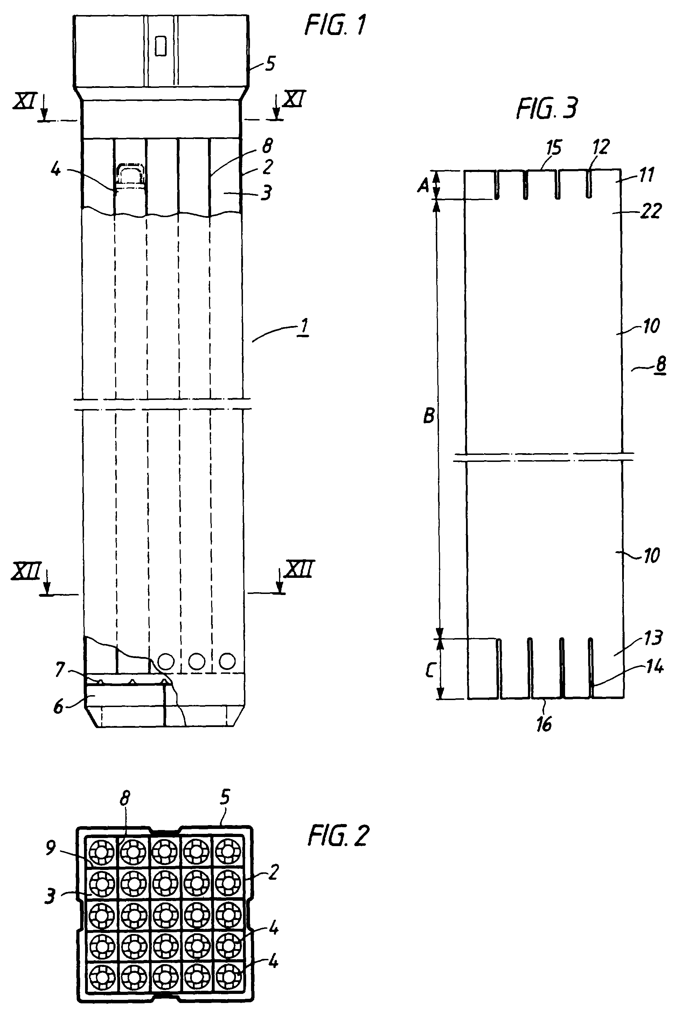

In Figure 1, 1 designates the whole magazine and 2 its tubular casing containing the channels 3 for fuel assemblies 4. The magazine 1 is provided with a top portion 5 with means for lifting the magazine 1 and a bottom portion 6 with a supporting grid 7 for the fuel assemblies 4. The channels 3 are formed from the first type of plates 8 which are arranged in cruciform configuration with the second type of plates 9 (Figure 2).

In Figure 2, the same designations as in Figure 1 are used.

Figure 3 shows a type of elongated first plates 8 which are provided with a continuous first intermediate portion 10 of a length B, extending across the first plate 8, a first end portion 11 of the length A provided with first slits 12 also with the length A and with a width which is at least equal to the thickness of the second plate 9 and preferably permits the insertion of the plate 9 into the slits 12 and 14 with a certain small play. The second end portion 13 of the plate 8 of the length C is also provided with second slits 14 of the same width as the slits 12. These second slits 14 have a length C. The plate 8 has a first short side 15 and a second short side 16.

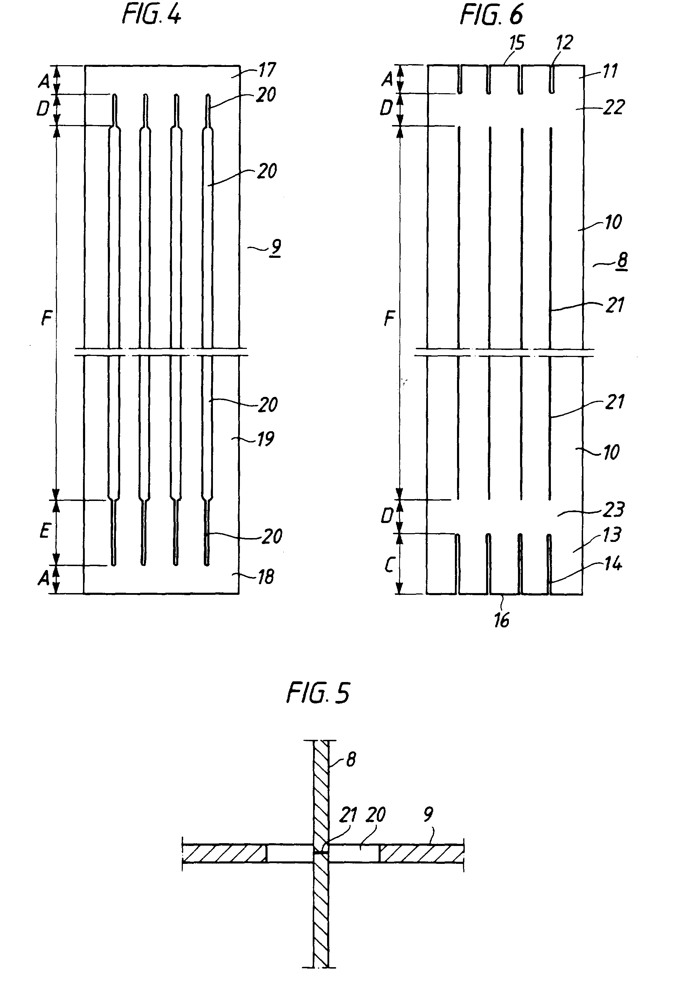

Figure 4 shows a second plate 9 with a continuous third end portion 17 and a fourth end portion 18 of the length A, extending across the second plate 9. The plate 9 has a second intermediate portion 19 between these end portions 17, 18. This second intermediate portion 19 is provided with a type of third slits 20 of the length of the intermediate portion and with a width which is at least equal to the thickness of the first plate 8. In the embodiment shown, the third slit 20, along an intermediat'e section with the length F, is made with a larger width which is at least equal to twice the thickness of the first plate 8. The sections of the third slit 20 with the lengths D and E, respectively, have a width which is somewhat larger than the thickness of the first plate 8 and thus allows the insertion thereof into the slit 20 with a certain small play.

Figure 5 shows a section of two crossing plates 8, 9 in a section where the third slit 20 is widest and the plate 8 is made according to the alternative of Figure 6, that is, the first intermediate portion 10 of the plate 8 is provided with a fourth slit 21. This slit 21 should have a width which is considerably smaller than the thickness of the plate 9.

As mentioned, Figure 6 shows an alternative embodiment of the first plate 8 according to Fiigure 3. The intermediate portion 10 of the plate 8 is here provided with a type of fourth slits 21 of the with mentioned above and the length F. Thus, the intermediate portion 10 will have two continuous unslitted ends or parts 22, 23 of a length D. As in Figure 3, the slits 12 and 14, respectively, have the length A and C, respectively. The lengths indicated in the different figures are only to be seen as examples of an embodiment. However, it is suitable that, for example, the length A of the third end portion 17 be equal to the length of the first slit 12 so that, when joining the plates 8 and 9 together, the end portion 17 can be fitted in full into the first slit 12. The same applies concerning the length D of the part 22 and the narrower section of the third slit 20 with the length E. This, therefore, means that A+E should be equal to C+D.

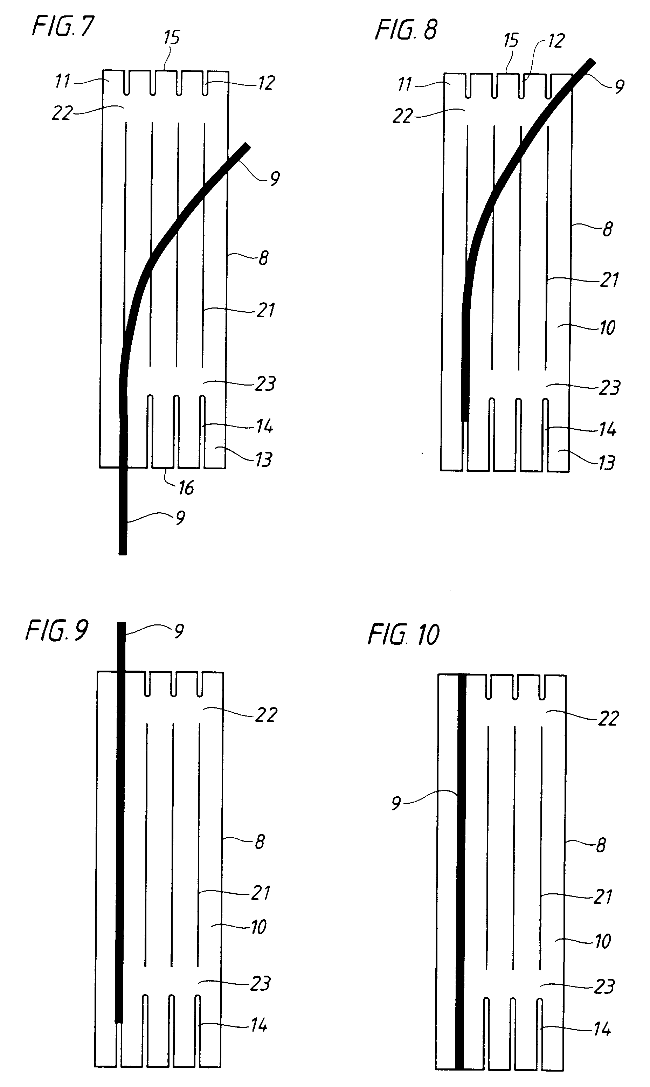

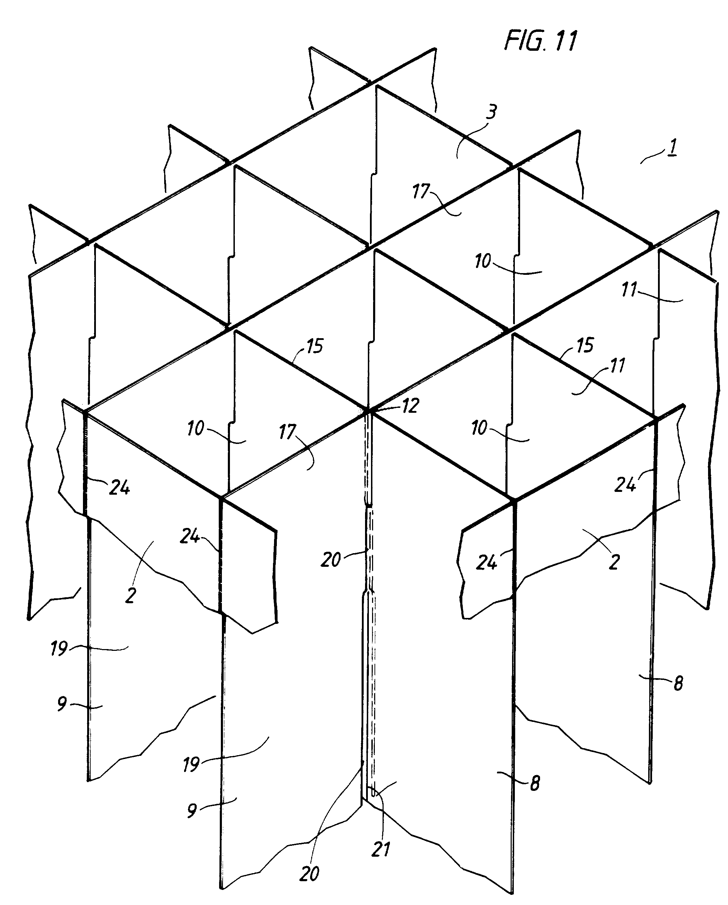

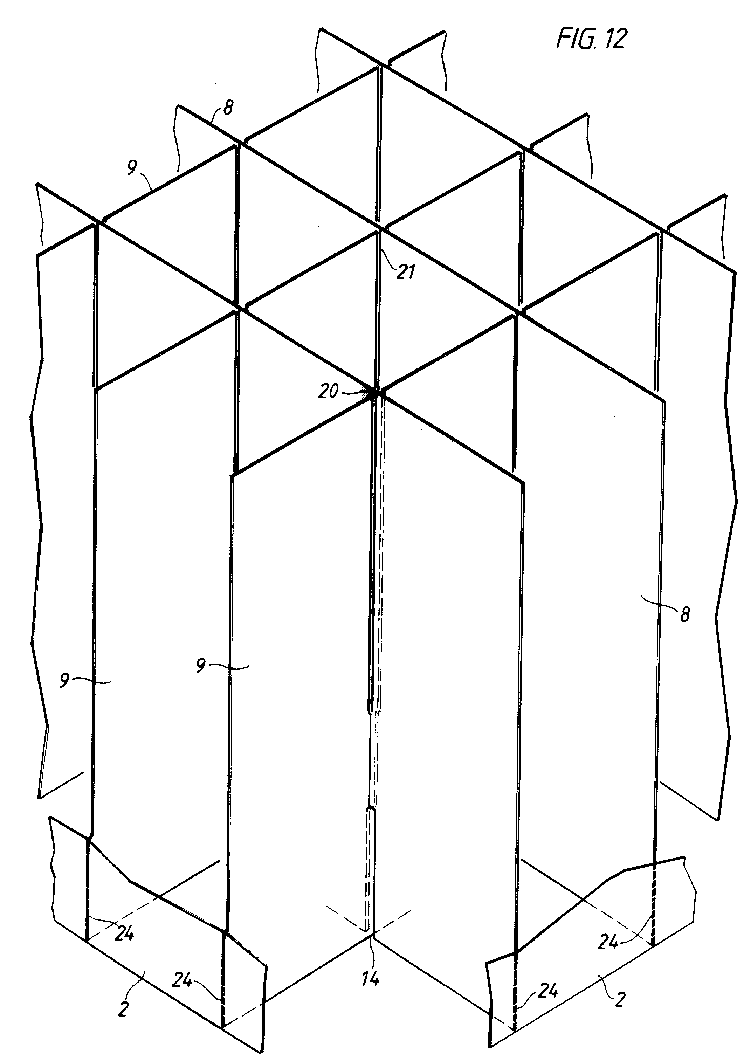

When joining together the plates 8, 9 in a cruciform configuration, as shown in an alternative with reference to Figures 7-10, it is clear from Figure 7 that the plate 9 is bent allowing the plate 8 to be fitted into one of the third slits 20 of the plate 9. Thereafter, according to Figure 8, the plate 9 is pushed upwards such that the fourth end portion 18 of the plate 9 slides to the bottom of a second slit 14 on the first plate 8. In this mutual position of plates 8, 9, the third slit 20 in the plate 9 shall now have such a length that the third end portion 17 on the plate 9 may be fitted in over the first short side 15 of the plate 8 and be straightened out as shown in Figure 9. Thereafter, the plate 9 is pushed downwards until the third end portion 17 of the plate 9 reaches the bottom in a first slit 12 as shown in Figure 10. Further, it is necessary for all the plates 8 in the magazine to be connected together by each plate 9. For that reason, all the plates 8 are arranged in parallel at a channel width's distance from each other and with the slits 12, 14 aligned. The example shows four plates 8, that is, the same number as the number of slits 20 in the plate 9. When the plates are connected, a plate 8 is now inserted into each slit 20 on a plate 9, whereupon the plates 9 are fitted over all of these plates 8 at the same time and connect these together as shown in Figures 7-10. In this way, the plates 8 and 9 are successively picked together to form a lattice-work of crossing plates which is then inserted into the casing 2. The plates now need not be welded to each other but only to the surrounding casing 2 at the short sides of the plates. These welds 24 are clear from Figures 11 and 12, which are otherwise furnished with the same designations as used above.

The plates 8, 9 are suitably made of absorber material, for example boron-alloyed steel whereas the casing 2 may consist of stainless sheet metal. Even if the plates 8 are formed with an unslitted intermediate portion, a satisfactory resilience in the walls of the channels 3 is obtained by the wide slits 20. The channel walls formed by the plate'9 may be displaced individually whereas the channel wails formed by the plate 8 are displaced simultaneously upon pressure on a channel wall. If it is desired that also these walls should be displaced individually, the alternative according to Figure 6 with the fourth slits 21 must be used.

It should be noted that when connecting the plates 8, 9 together, this connection procedure can be the reverse to that described with reference to Figures 7-10. However, the slits 12 have to be made longer and the unslitted part 22 be moved downwards such that the third end portion 17 of the second plate 9 can be inserted so far into a slit 12 that the opposite fourth end portion 18 thereof can be fitted over the second short side 16 of the first plate 8 and then be inserted into a second slit 14.

## Claims

1. A magazine (1) for storage of fuel assemblies (4) with spent nuclear fuel comprising a tubular casing (2) including a number of channels (3) for said fuel assemblies (4), said channels (3) being formed by a first type of elongated plates (8) joined together in cruciform configuration with a second type of elongated plates (9) the first and second types of plates (8, 9) being provided with slits, **characterized in that**
each one of said first plates (8) is formed with at least one continuous first intermediate portion (10) extending across the plate (8), a first end portion (11) between said first intermediate portion (10) and a first short side (15) of the plate (8), a second end portion (13) between the intermediate portion (10) and a second short side (16) of the plate (8), said first end portion (11) being provided with a number of first slits (12), said second end portion (13) with a number of second slits (14), said first (12) and second (14) slits extending in parallel with the longitudinal direction of the plate (8) from the intermediate portion and up to a short side (15, 16) and having a width at least equal to the thickness of said second plate (9),
said second plate (9) is made with a continuous third end portion (17) and a continous fourth end portion (18) extending across the plate (9), a second intermediate portion (19) between said end portions (17, 18), a number of third slits (20) extending in said second intermediate portion (19) and being parallel with the longitudinal direction of the plate (9) and having a width at least equal to the thickness of said first plate (8),
the sum of the length of either a first (12) or a second slit (14) and a third slit (20) is at least so great that, with one of the end portions of a second plate (9) inserted into the bottom of a first (12) or a second (14) slit, the opposite end portion of said second plate (9) may be fitted over the opposite second (16) or first (15) short side of said first plate (8).

2. A magazine according to claim 1, **characterized in that** crossed plates (8, 9) are joined together by inserting the third end portion (17) of the second plate (9) into a first slit (12) belonging to the first plate (8) and inserting the fourth end portion (18) of the second plate (9) into a second slit (14) which is aligned with said first slit (12) and belongs to the same first plate (8), and welding the short sides of the plates (8, 9) to the casing (2).

3. A magazine according to claim 1 or 2, **characterized in that** said third slit (20) at each end has a smaller section with a width just allowing the insertion of said first plate (8) through this part of the third slit (20) and that the third slit (20) between said sections has a width at least equal to twice the thickness of said first plate (8).

4. A magazine according to claim 1, **characterized in that** the first intermediate portion (10) along part of its length is provided with a number of fourth slits (21) aligned with said first (12) and second (14) slits such that the ends (22, 23) of the intermediate portion (10) remain unslitted.

5. A method for assembly of a magazine (1) for spent nuclear fuel assemblies (4) comprising a tubular casing (2) containing a number of channels (3) formed by a first type of rectangular plates (8) joined together crosswise with a second type of rectangular plates (9) according to claim 1, **characterized in that** each one of said first plates (8) is made with a continuous first intermediate portion (10) extending across the plate, a first end portion (11) between said first intermediate portion (10) and the first short side (15) of the plate, a second end portion (13) between the intermediate portion (10) and the second short side (16) of the plate, a number of first slits (12) being provided in said first end portion (11) and a number of second slits (14) being provided in said second end portion (13), said first (12) and second (14) slits being arranged in parallel with the longitudinal direction of the plate (8) from the intermediate portion (10) and up to a first (15) and second (16) short side, respectively, and having a width at least equal to the thickness of one of said second plate (9),
each one of said second plates (9) is made with a continuous third (17) and fourth (18) end portion extending across the plate (9), and a second intermediate portion (19) between said end portions (17, 18), a number of third slits (20) which are arranged in said second intermediate portion (19) and are parallel to the longitudinal direction of the plate (9) and have a width at least equal to the thickness of one of said plates (8),
said first plates (8) are arranged with their plane in parallel and with the corresponding slits of the plates (8) in the different planes arranged in a line,
a crossing second plate (9) is bent and one of its end portions inserted into the bottom of first (12) or second (14) slits positioned along a line, whereupon the opposite end portion of the plate (9) is fitted over the opposite second (16) and first (15) short sides, respectively, of the first plates (8), and the second plate (9) is straightened and inserted into second (14) and first (12) slits, respectively, opening out into said short sides, the plates (8, 9) are displaced in relation to each other so that their short sides substantially coincide, the method is repeated with additional second plates (9) until all the plates (8, 9) have been joined together to form a lattice-work of channels (3), whereupon said lattice-work is inserted into the casing (2) and is joined to this.

6. A method according to claim 5, **characterized in that** the slits (12, 14, 20, 21) in the different plates (8, 9) are arranged at a channel width's distance from each other.

## Patentansprüche

1. Magazin (1) zur Lagerung von Brennelementen (4) mit ausgebranntem Kernbrennstoff, zu welchem Magazin ein rohrförmiger Kasten (2) mit einer Anzahl von Kanälen (3) für die genannten Brennelemente (4) gehören, wobei die Kanäle (3) aufgebaut sind aus einem ersten Typ von langgestreckten Platten (8), die in einer kreuzförmigen Konfiguration mit einem zweiten Typ von langgestreckten Platten (9) zusammengefügt sind und wobei der erste und der zweite Plattentyp (8, 9) mit Schlitzen versehen sind, **dadurch gekennzeichnet** , daß jede der genannten ersten Platten (8) einen kontinuierlichen ersten Mittelabschnitt (10) aufweist, der sich quer zur Platte (8) erstreckt, einen ersten Endabschnitt (11) zwischen dem genannten ersten Mittelabschnitt (10) und einer ersten kurzen Seite (15) der Platte (8) aufweist, und einen zweiten-Endabschnitt (13) zwischen dem Mittelabschnitt (10) und einer zweiten kurzen Seite (16) der Platte (8) aufweist, daß der erste Endabschnitt (11) mit einer Anzahl von ersten Schlitzen (12) versehen ist, daß der zweite Endabschnitt (13) mit einer Anzahl von zweiten Schlitzen (14) versehen ist, daß die genannten ersten (12) und zweiten (14) Schlitze parallel zur Längsrichtung der Platte (8), von dem Mittelabschnitt bis zu einer kurzen Seite (15,16) verlaufen und eine Breite haben, die mindestens gleich der Dicke der genannten zweiten Platte (9) ist,
daß die zweite Platte (9) einen kontinuierlichen dritten Endabschnitt (17) und einen kontinuierlichen vierten Endabschnitt (18) aufweist, die sich quer zur Platte (9) erstrecken, einen zweiten Mittelabschnitt (19) zwischen den genannten Endabschnitten (17, 18) aufweist, und eine Anzahl dritter Schlitze (20) aufweist, die sich in dem zweiten Mittelabschnitt (19) erstrecken und parallel zur Längsrichtung der Platte (9) verlaufen und eine Breite von mindestens der Dicke der ersten Platte (8) haben,
daß die Summe der Länge von entweder einem ersten (12) oder einem zweiten (14) Schlitz und einem dritten Schitz (20) mindestens so groß ist, daß, wenn einer der Endabschnitte einer zweiten Platte (9) bis zum Boden eines ersten (12) oder eines zweiten Schitzes (14) eingeführt ist, der entgegengesetzte Endabschnitt der genannten zweiten Platte (9) über die entgegengesetzte zweite (16) oder erste (15) kurze Seite der genannten ersten Platte (8) gebracht werden kann.

2. Magazin nach Anspruch 1, **dadurch gekennzeichnet** , daß gekreuzte Platten (8, 9) dadurch zusammengefügte sind, daß der dritte Endabschnitt (17) der zweiten Platte (9) in einen ersten Schlitz (12) der ersten Platte (8) eingefügt ist und der vierte Endabschnitt (18) der zweiten Platte (9) in einen zweiten Schlitz (14), der mit dem genannten ersten Schlitz (12) fluchtet und zu derselben ersten Platte (8) gehört, und daß die kurzen Seiten der Platten (8, 9) an den Kasten (2) geschweißt sind.

3. Magazin nach Anspruch 1 oder 2, **dadurch gekennzeichnet** , daß der genannte dritte Schlitz (20) an jedem Ende einen kleineren Abschnitt mit einer Breite hat, die gerade die Einführung der genannten ersten Platte (8) in diesen Teil des dritten Schitzes (20) erlaubt, und daß der dritte Schlitz (20) zwischen den genannten Abschnitten eine Breite von mindestens der doppelten Dicke der genannten ersten Platte (8) hat.

4. Magazin nach Anspruch 1, **dadurch gekennzeichnet** , daß der erste Mittelabschnitt (10) längs eines Teils seiner Länge mit einer Anzahl vierter Schlitze (21) versehen ist, die mit den genannten ersten (12) und zweiten (14) Schlitzen derart fluchten, daß die Enden (22, 23) des Mittelabschnitts (10) ungeschlitzt bleiben.

5. Verfahren zur Montage eines Magazins (1) für ausgebrannte Kernbrennelemente (4), zu welchem Magazin ein rohrförmiger Kasten (2) gehört, der eine Anzahl von Kanälen (3) hat, die gebildet werden aus einem ersten Typ rechteckiger Platten (8), die kreuzweise mit einem zweiten Typ rechteckiger Platten (9) gemäß Anspruch 1 verbunden sind, **dadurch gekennzeichnet**, daß jede erste Platte (8) einen kontinuierlichen ersten Mittelabschnitt (10) aufweist, der sich quer zur Platte erstreckt, einem ersten Endabschnitt (11) zwischen dem genannten ersten Mittelabschnitt (10) und der ersten kurzen Seite (15) der Platte aufweist, einem zweiten Endabschnitt (13) zwischen dem Mittelabschnitt (10) und der zweiten kurzen Seite (16) der Platte aufweist, eine Anzahl erster Schlitze (12) aufweist, die in dem genannten ersten Endabschnitt (11) vorhanden sind, und eine Anzahl zweiter Schlitze (14) aufweist, die in dem genannten zweiten Endabschnitt (13) vorhanden sind, wobei die ersten (12) und zweiten (14) Schlitze parallel zur Längsrichtung der Platte (8) von dem Mittelabschnitt (10) bis zu einer ersten (15) beziehungsweise einer zweiten (16) kurzen Seite verlaufen und eine Breite haben, die mindestens gleich der Dicke einer der genannten zweiten Platten (9) ist,
daß jede der genannten zweiten Platten (9) einen kontinuierlichen dritten (17) und vierten (18) Endabschnitt aufweist, die sich quer zur Platte (9) erstrecken, einen zweite Mittelabschnitt (19) zwischen den genannten Endabschnitten (17, 18) aufweist und eine Anzahl dritter Schlitze (20) aufweist, die in dem genannten zweiten Mittelabschnitt (19) angebracht sind und parallel zu der Längsrichtung der Platte (9) verlaufen und eine Breite haben, die mindestens gleich der Dicke einer der ersten Platten (8) ist,
daß die genannten ersten Platten (8) mit ihren Ebenen parallel zueinander und mit den entsprechenden Schlitzen der Platten (8) in den verschiedenen Ebenen in einer Linie angeordnet sind,
daß eine kreuzende zweite Platte (9) abgebogen wird und einer ihrer Endabschnitte in den Boden erster (12) oder zweiter (14) auf einer Linie liegender Schlitze eingeführt wird, woraufhin der entgegengesetzte Endabschnitt der Platte (9) über die entgegengesetzte zweite (16) beziehungsweise erste (15) kurze Seite der ersten Platten (8) gebracht wird, daß die zweite Platte (9) gerade gerichtet wird und in zweite (14) beziehungsweise erste (12) nach den genannten kurzen Seiten offene Schlitze eingeschoben wird, wobei die Platten (8, 9) derart gegeneinander verschoben werden, daß ihre kurzen Seiten im wesentlichen zusammenfallen, und daß das Verfahren mit weiteren zweiten Platten (9) wiederholt wird, bis alle Platten (8, 9) zu einem Gitterwerk von Kanälen (3) zusammengefügt worden sind, wonach das genannte Gitterwerk in den Kasten (2) eingefügt und mit diesem verbunden wird.

6. Verfahren nach Anspruch 5, **dadurch gekennzeichnet** , daß die Schlitze (12, 14, 20, 21) in den verschiedenen Platten (8, 9) im Abstand einer Kanalbreite voneinander entfernt angeordnet sind.

## Revendications

1. Râtelier de stockage (1) destiné au stockage d'assemblages combustibles (4) contenant un combustible nucléaire épuisé, comprenant une gaine tubulaire (2) qui comporte un certain nombre de canaux (3) pour les assemblages combustibles (4), ces canaux (3) étant formés par un premier type de plaques oblongues (8) jointes ensemble en une configuration cruciforme avec un second type de plaques oblongues (9), les premier et second types de plaques (8, 9) comportant des fentes, caractérisé en ce que : chacune des premières plaques (8) comporte au moins une première partie intermédiaire continue (10) s'étendant sur toute la largeur de la plaque (8), une première partie d'extrémité (11) entre la première partie intermédiaire (10) et un premier côté court (15) de la plaque (8), une seconde partie d'extrémité (13) entre la partie intermédiaire (10) et un second côté court (16) de la plaque (8), la première partie d'extrémité (11) comportant un certain nombre de premières fentes (12), la seconde partie d'extrémité (13) comportant un certain nombre de secondes fentes (14), les premières fentes (12) et les secondes fentes (14) s'étendant parallèlement à la direction longitudinale de la plaque (8), de la partie intermédiaire et jusqu'à un côté court (15, 16), et ayant une largeur au moins égale à l'épaisseur de la seconde plaque (9),
la seconde plaque (9) comporte une troisième partie d'extrémité continue (17) et une quatrième partie d'extrémité continue (18), s'étendant sur toute la largeur de la plaque (9), une seconde partie intermédiaire (19) entre ces parties d'extrémité (17, 18), un certain nombre de troisièmes fentes (20) s'étendant dans la seconde partie intermédiaire (19) et étant parallèles à la direction longitudinale de la plaque (9), et ayant une largeur au moins égale à l'épaisseur de la première plaque (8),
la somme de la longueur d'une première fente (12) ou d'une seconde fente (14), d'une part, et d'une troisième fente (20) d'autre part, est au moins suffisamment grande pour que, avec l'une des parties d'extrémité d'une seconde plaque (9) insérée jusqu'au fond d'une première fente (12) ou d'une seconde fente (14), la partie d'extrémité opposée de la seconde plaque (9) puisse être ajustée sur le second (16) ou le premier (15) côté court opposé, de la première plaque (8).

2. Râtelier de stockage selon la revendication 1, caractérisé en ce que les plaques croisées (8, 9) sont jointes ensemble en insérant la troisième partie d'extrémité (17) de la seconde plaque (9) dans une première fente (12) appartenant à la première plaque (8), et en insérant la quatrième partie d'extrémité (18) de la seconde plaque (9) dans une seconde fente (14) qui est alignée avec la première fente (12) et qui appartient à la même première plaque (8), et en soudant à la gaine (2) les côtés courts des plaques (8, 9).

3. Râtelier de stockage selon la revendication 1 ou 2, caractérisé en ce que la troisième fente (20) à chaque extrémité a une plus petite section avec une largeur qui permet juste l'insertion de la première plaque (8) dans cette partie de la troisième fente (20), et en ce que la troisième fente (20) entre ces sections a une largeur au moins égale au double de l'épaisseur de la première plaque (8).

4. Râtelier de stockage selon la revendication 1, caractérisé en ce que la première partie intermédiaire (10) comporte, le long d'une partie de sa longueur, un certain nombre de quatrièmes fentes (21) alignées avec les premières fentes (12) et les secondes fentes (14), de façon que les extrémités (22, 23) de la partie intermédiaire (10) restent dépourvues de fentes.

5. Procédé pour l'assemblage d'un râtelier de stockage (1) pour des assemblages combustibles nucléaires (4) épuisés, comprenant une gaine tubulaire (2) contenant un certain nombre de canaux (3) qui sont formés par un premier type de plaques rectangulaires (8) jointes ensemble de manière croisée avec un second type de plaques rectangulaires (9), selon la revendication 1, caractérisé en ce que chacune des premières plaques (8) comporte une première partie intermédiaire (10) continue s'étendant sur toute la largeur de la plaque, une première partie d'extrémité (11) entre la première partie intermédiaire (10) et le premier côté court (15) de la plaque, une seconde partie d'extrémité (13) entre la partie intermédiaire (10) et le second côté court (16) de la plaque, un certain nombre de premières fentes (12) étant formées dans la première partie d'extrémité (11) et un certain nombre de secondes fentes (14) étant formées dans la seconde partie d'extrémité (13), ces premières (12) et secondes (14) fentes étant disposées parallèlement à la direction longitudinale de la plaque (8), à partir de la partie intermédiaire (10) et jusqu'à un premier côté court (15) et un second côté court (16), respectivement, et ayant une largeur au moins égale à l'épaisseur de l'une des secondes plaques (9),
chacune des secondes plaques (9) comporte une troisième (17) et une quatrième (18) parties d'extrémité continues, s'étendant sur toute la largeur de la plaque (9), et une seconde partie intermédiaire (19) entre ces parties d'extrémité (17, 18), ainsi qu'un certain nombre de troisièmes fentes (20) qui sont disposées dans la seconde partie intermédiaire (19) et sont parallèles à la direction longitudinale de la plaque (9) et ont une largeur au moins égale à l'épaisseur de l'une des plaques (8),
les premières plaques (8) sont disposées avec leur plan parallèle et avec les fentes correspondantes des plaques (8) dans les différents plans disposées en alignement,
une seconde plaque (9) sécante est courbée et l'une de ses parties d'extrémité est insérée jusqu'au fond des premières (12) ou secondes (14) fentes placées en alignement, après quoi la partie d'extrémité opposée de la plaque (9) est ajustée sur les seconds (16) et premiers (15) côtés courts opposés, respectivement, des premières plaques (8), et la seconde plaque (9) est redressée et est insérée dans des secondes (14) et premières (12) fentes, respectivement, débouchant dans les côtés courts, les plaques (8, 9) sont mutuellement déplacées de façon que leurs côtés courts coïncident pratiquement, et le procédé est répété avec des secondes plaques (9) supplémentaires, jusqu'à ce que toutes les plaques (8, 9) aient été jointes ensemble pour former un treillis de canaux (3), après quoi ce treillis est inséré dans la gaine (2) et est joint à celle-ci.

6. Procédé selon la revendication 5, caractérisé en ce que les fentes (12, 14, 20, 21) dans les différentes plaques (8, 9) sont disposées à une distance les unes des autres qui est égale à la largeur d'un canal.
